# EUROPEAN PATENT SPECIFICATION

(11) **EP 3 337 002 B1**
(45) Date of publication and mention of the grant of the patent: **14.06.2023**
(21) Application number: 16204737.7
(22) Date of filing: 16.12.2016
(51) Int. Cl.: H02J 7/00, B60L 58/22, H01M 10/44

(54) **BATTERY SYSTEM AND CONTROL UNIT FOR A BATTERY SYSTEM**
BATTERIESYSTEM UND STEUEREINHEIT FÜR EIN BATTERIESYSTEM
SYSTÈME DE BATTERIE ET UNITÉ DE COMMANDE POUR UN SYSTÈME DE BATTERIE

(43) Date of publication of application: 20.06.2018
(73) Proprietor: Samsung SDI Co., Ltd, Gyeonggi-do 17084 (KR)
(72) Inventor: HOFER, Maximilian, 8230 Hartberg (AT); KORHERR, Thomas, 8230 Hartberg (AT)
(74) Representative: Gulde & Partner

(56) References cited:
- EP-A1- 2 775 621
- FR-A1- 2 924 870
- US-A1- 2010 090 659
- US-A1- 2013 187 616
- US-A1- 2015 197 163
- US-B2- 9 327 610

## Description

### Field of the Invention

The present invention relates to a battery system and to a control unit for such a battery system.

### Technological Background

A rechargeable or secondary battery differs from a primary battery in that it can be repeatedly charged and discharged, while the latter provides only an irreversible conversion of chemical to electrical energy. Low-capacity rechargeable batteries are used as power supply for small electronic devices, such as cellular phones, notebook computers and camcorders, while high-capacity rechargeable batteries are used as the power supply for hybrid vehicles and the like. In general, rechargeable batteries include an electrode assembly including a positive electrode, a negative electrode, and a separator interposed between the positive and negative electrodes, a case receiving the electrode assembly, and an electrode terminal electrically connected to the electrode assembly. An electrolyte solution is injected into the case in order to enable charging and discharging of the battery via an electrochemical reaction of the positive electrode, the negative electrode, and the electrolyte solution. The shape of the case, e.g. cylindrical or rectangular, depends on the battery's intended purpose.

Rechargeable batteries may be used as a battery module formed of a plurality of unit battery cells coupled in series and/or in parallel so as to provide a high energy density, e.g. for motor driving of a hybrid vehicle. That is, the battery module is formed by interconnecting the electrode terminals of the plurality of unit battery cells depending on a required amount of power and in order to realize a high-power rechargeable battery, e.g. for an electric vehicle. One or more battery modules are mechanically and electrically integrated, equipped with a thermal management system and set up for communication with one or more electrical consumers in order to form a battery system.

For meeting the dynamic power demands of various electrical consumers connected to the battery system a static control of battery power output and charging is not sufficient. Thus, steady or intermittent exchange of information between the battery system and the controllers of the electrical consumers is required. This information includes the battery systems actual state of charge (SoC), potential electrical performance, charging ability and internal resistance as well as actual or predicted power demands or surpluses of the consumers.

For monitoring, controlling and/or setting of the aforementioned information a battery system usually comprises a battery management unit (BMU) and/or a battery management system (BMS). Such control units may be an integral part of the battery system and disposed within a common housing or may be part of a remote control unit communicating with the battery system via a suitable communication bus. In both cases, the control unit communicates with the electrical consumers via a suitable communication bus, e.g. a CAN or SPI interface.

The BMS/BMU is usually coupled to the controller of one or more electrical consumers as well as to each of the battery modules of the battery system. Usually each battery module comprises a cell supervision circuit (CSC) that is configured to maintain the communication with the BMS/BMU and with other battery modules. The CSC may be further configured to monitor the cell voltages of some or each of the battery module's battery cells and to actively or passively balance the voltages of the individual battery cells within the module.

Particularly at the end of life of battery systems, the battery cells need to be discharged in order to achieve a secure state for disposal, storage or recycling of the system's battery cells. According to the prior art, the battery cells are actively connected to resistors, once their capacities fall under a predetermined threshold, and hence bleed out. The connections between cells and resistors are actively provided by a control unit, e.g. a BMS, BMU or CSC. As the prior art requires a functioning control unit, the bleed out must be initiated at sufficient cell capacity and hence cell capacity is wasted.

US 2015/197163 A1 discloses a battery for a vehicle and comprising a plurality of cells and a plurality of charge balancing circuits connected in parallel with one of the battery cells and comprising a resistive load and a switch. FR 2 924 870 A1 discloses a battery system with a plurality of cells, each being part of a circuit comprising a secondary winding connected in parallel to the cell, wherein a balancing circuit comprises a primary coil powered with the battery system voltage depending on a switching state of a transistor. US 9 327 610 B2 discloses a system and method for discharging a high voltage battery following a vehicle damaging event by automatically discharging each battery cell using a cell balancing circuit and the stored energy in the battery. None of the prior art covers the end of life of the cells.

It is thus an object of the present invention to provide a battery system that can be securely transferred into a discharged state at the end of its service life.

### Summary of Invention

One or more of the drawbacks of the prior art could be avoided or at least reduced by means of the present invention that solves the abovementioned objective.

In particular, a battery system is provided in accordance with the appended claims. The battery system comprises a plurality of battery cells, preferably a plurality of *n* battery cells, connected in series and a plurality of balancing circuits. The plurality of battery cells connected in series may comprise battery bundles connected in series, wherein each battery bundle comprises a plurality of battery cells connected in parallel. Each battery cell or battery bundle comprises a first node and a second node. In order to connect the battery cells or bundles in series, the second node of a battery cell or bundle is connected to the first node of another battery cell or bundle, preferably an adjacent battery cell or bundle, and so on. Each balancing circuit is connected in parallel to one of the plurality of battery cells (or bundles of battery cells) and comprises a bleed resistor that is connected in series with a balancing switch. According to the present invention, at least one balancing switch of the battery system is configured to be set non-conductive in response to a control signal and to be set conductive in the absence of the control signal. Preferably all balancing switches of the battery system are configured to be set non-conductive in response to a control signal and to be set conductive in the absence of the control signal.

In the battery system according to the invention, the battery cells of the battery system are discharged via the bleed resistors as long as no control signal is applied to the balancing switches. Hence, at the end of life of the battery system an auto discharge functionality is provided by utilizing self-conducting, i.e. normal on, balancing switches. Thus, the battery cells become safely discharged even if the battery cells cannot longer power a control unit. Hence, the battery system will safely reach a secure state for disposal, storage or recycling. The balancing switches are further configured to be involved in providing balancing between the battery cells. Hence, no additional components are required for achieving the auto discharge functionality and thus no additional costs and space requirements arise from the present invention.

The battery system further comprises a control unit with a balancing controller that is configured to output an individual control signal to each of the balancing switches. In other words, a certain balancing switch can be set non-conducting or conducting individually by applying a specific control signal to that balancing switch. Different control signals may be utilized for different balancing switches. The combination of the balancing controller and the plurality of balancing switches allows for passive or active balancing of the battery cells of the battery system. Therein, the battery cells are considered balanced when all the cells have the same voltage per cell, particularly whilst in a fully charged or discharged state. If one or more of the cells in a pack are not matched then the battery pack is not balanced.

The balancing controller may further be configured to monitor individual cell voltages and to determined voltage variations between different battery cells. When a voltage variation is smaller than a specific value, the balancing controller is configured to provide the control signal to the balancing switches. When a voltage variation between two cells becomes greater than a specific value, the balancing controller is configured to enable cell balancing by depleting the control signal to the balancing switch connected in parallel with the higher charged cell of the two cells. Thus, power of the higher charged cell is burned via the bleed resistor and thus the voltage variation between the cells is diminished. As this step is repeated for all cells, the voltages, states of charge or capacities of all cells of a battery system become adjusted to the lowest voltage, state of charge or capacity of the battery system's cells with the lowest voltage, state of charge or capacity.

According to a preferred embodiment of the battery system, depletion mode transistors are used as balancing switches of the balancing circuits. Depletion mode transistors are characterized in that they are normally ON, i.e. conductive, at a zero gate-source voltage. The depletion mode transistors preferably are depletion mode MOSFETs such as N-type depletion mode MOSFETS, i.e. depletion mode NMOS transistors, or P-type depletion mode MOSFETs, i.e. depletion mode PMOS transistors. In both cases, the depletion mode transistors according to the present invention are switched on at a V_{GS} of 0 V, i.e. they are so called ZeroVt transistors.

Particularly preferred, the battery system comprises a plurality of depletion mode NMOS transistors, wherein each depletion mode NMOS transistor comprises a source connected to a first node of one of the plurality of battery cells, a drain connected to a second node of this battery cell and a gate connected to the balancing controller. The use of NMOS transistors has the advantage that only a single power supply voltage is necessary for realizing various logical functions. NMOS transistors have only little power consumption when switched off and hence internal power consumption of the battery system is lowered by using NMOS transistors.

Further preferred, the balancing controller is configured to connect the gate of an NMOS transistor that is connected in parallel with an *i-th* battery cell of the plurality of battery cells (*i-th* NMOS transistor) to the first node of the *(i-1)-th* battery cell of the plurality of battery cells via an *i-th* gate line. Therein, the gate of the *i-th* NMOS transistor is a single battery cell potential below the source of the *i-th* NMOS transistor and hence a negative voltage applies to the gate of the *i-th* NMOS transistor.

The battery cells are connected in series in an order starting from a first battery cell that is connected to a second battery cell that further is connected to an *(i-1)-th* battery cell, then an *i-th* battery cell and then an *(i+1)-th* battery cell up to a last battery cell, preferably an *n-th* battery cell. The voltage of a single battery cell applies between the first node and the second node of the first battery cell, the second battery cell and the *i-th* battery cell, respectively. However the voltage of two battery cells applies between the first node of the first battery cell, e.g. ground, and the second node of the second battery cell. Further, the voltage of *i* battery cells applies between the first node of the first battery cell, e.g. ground, and the second node of the *i-th* battery cell. In other words, the absolute potential of the battery cell's nodes relative to ground rises with every battery cell. Hence, by connecting the gate of the *i-th* NMOS transistor to the first node of the *(i-1)-th* battery cell via an *i-th* gate line, the gate of the i-th NMOS transistor is a single battery cell potential below the source of the i-th NMOS transistor and hence a negative voltage applies to the gate of the i-th NMOS transistor.

Further preferred, the battery system further comprises one depletion mode PMOS transistor that is connected in parallel with the first battery cell of the plurality of battery cells. According to this embodiment, a battery system comprising n battery cells comprises *n-1* depletion mode NMOS transistors and a single depletion mode PMOS transistor. The gate of the depletion mode transistor connected in parallel with the first battery cell cannot be connected to a battery cell node with a lower potential as the source of this transistor, which is on ground potential. The depletion mode PMOS transistor comprises a drain connected to a first node of the first battery cell, a source connected to a second node of the first battery cell and a gate connected to the balancing controller. Particularly preferred, the balancing controller is configured to connect the gate to a second node of the second battery cell of the plurality of battery cells via a first gate line. Hence, the gate of the PMOS transistor is a single battery cell potential above the source of the PMOS transistor and hence a positive voltage applies to the gate of the PMOS transistor.

According to an alternatively preferred embodiment, the battery system comprises only depletion mode NMOS transistors. Exemplarily, a battery system with *n* battery cells comprises *n* depletion mode NMOS transistors. As described above, the balancing controller is configured to connect the gates of the individual transistors to a certain potential required to switch the transistors non-conductive. The balancing controller provides a control signal to the gates of the transistors preferably via individual gate lines. Particularly preferred, the balancing controller comprises a plurality of inverting charge pumps disposed in a plurality of gate lines. Therein each inverting charge pump comprises an input node that is connected to the source of one of the plurality of depletion mode NMOS transistors and an output node that is connected to the gate of the respective NMOS transistor. Thus, a negative voltage is applied to the gate of the NMOS transistors with respect to the source of the respective NMOS transistor. The inverting charge pump preferably is an inverting Dickson charge pump. The diodes of the classic inverting charge pump designs may be replaced with MOSFETs as active diodes for reducing voltage drops over the inverting charge pump.

According to an alternative embodiment, the battery system comprises *n* battery cells and *n* PMOS transistors. The balancing controller is again configured to connect the gates of the individual transistors to a certain potential required to switch the transistors non-conductive, preferably via individual gate lines. Further preferred, the balancing controller comprises a plurality of charge pumps disposed in the plurality of gate lines. Therein, each charge pump comprises an input node that is connected to the source of one of the plurality of depletion mode PMOS transistors and an output node that is connected to the gate of the respective PMOS transistor. Thus, a positive voltage is applied to the gate of the PMOS transistors with respect to the source of the respective PMOS transistor. The charge pump preferably is a Dickson charge pump, wherein the diodes of the classic charge pump designs may replaced with MOSFETs as active diodes for reducing voltage drops over the charge pump.

Further preferred, the balancing controller comprises a plurality of switch elements, wherein each switch element is disposed in a gate line. The plurality of switch elements are configured to be set conductive for applying the control signal to the gates of the plurality of balancing switches and are configured to be set non-conductive for applying no control signal to the plurality of balancing switches. As the quality of battery cells increases, balancing will often be not required during normal operation of the battery system. Hence, the switch elements should be set conductive as default in order to provide the control signal to the gates of the transistors in order to set them not-conductive. Particularly preferred, the battery system thus comprises a plurality of depletion mode transistors as switch elements. The depletion mode switch elements are thus conductive during normal operation and hence the control signals are applied via the gate lines to the balancing switches that are hence set non-conductive during normal operation.

In order to provide the control signal to the balancing switches when balancing between individual battery cells is required, the balancing controller preferably further comprises a plurality of comparators, wherein each comparator comprises an inverting input connected to an *i-th* battery cell, i.e. being interconnected between the first node and the second node of the *i-th* battery cell, and a non-inverting input connected to an *(i+1)-th* battery cell, i.e. being interconnected between the first node and the second node of the *(i*+*1)*-th battery cell. The polarity and intensity of the comparator's output depends on the relative amplitude of the voltages applied to the inverter's inputs and hence on the voltage differences between the *i-th* and the *(i+1)-th* battery cell. The comparator's output is preferably connected to the gate of one of the depletion mode switch elements in order to set it conductive based on the whether or not the voltage difference of the *i-th* and the *(i+1)-th* cell is above a predetermined threshold. The comparator's output may be amplified before being applied to the gate.

In a further preferred embodiment of the battery system of the present invention, the control unit comprises a plurality of cell pins, preferably of *n* cell pins, configured for receiving a cell voltage of one of a plurality of battery cells or battery bundles, preferably of *n* battery cells or battery bundles. In this embodiment, the control unit further comprises a plurality of depletion mode transistors that are configured for being set non-conductive in response to a control signal and to be set conductive in the absence of the control signal, wherein the amount of depletion mode transistors preferably equals the amount of battery cells and particularly preferred equals *n.* Each depletion mode transistor is configured to be connected in parallel with one of the plurality of battery cells and is further configured to be connected in series with a bleed resistor. The balancing controller is configured to output an individual control signal to the gate of each of the depletion mode transistors. The control unit further comprises a plurality of balance pins, preferably *n* balance pins. Each balance pin is configured to be connected to a cell pin via a bleed resistor and each depletion mode transistor is interconnected between a cell pin and a balance pin, particularly the channel of each of the depletion transistors is configured to be interconnected between a cell pin and a balance pin. In detail, one of a source and a drain of each depletion mode transistor is connected to an *i-th* balance pin and the other one of the source and the drain of the depletion mode transistor is connected to an *(i-1)-th* cell pin, wherein the *i-th* balance pin is configured for being electrically connected to the *i-th* cell pin via an external bleed resistor. Exemplarily, a drain of a depletion mode NMOS transistor is connected to the *i-th* balance pin and the source of that transistor is connected to the *(i-1)-th* cell pin, wherein the *i-th* balance pin is configured for being electrically connected to the *i-th* cell pin via an external bleed resistor. A drain of a depletion mode PMOS transistor is connected to the *i-th* balance pin and the source of that transistor is connected to the *i-th* cell pin, wherein the *i-th* balance pin is configured for being electrically connected to the *(i-1)-th* cell pin via one of the external bleed resistors.

Another aspect of the present invention relates to a control unit for a battery system according to the appended claims. The control unit comprises a plurality of cell pins, preferably of *n* cell pins, configured for receiving a cell voltage of one of a plurality of battery cells or battery bundles, preferably of *n* battery cells or battery bundles. The control unit further comprises a plurality of depletion mode transistors that are configured for being set non-conductive in response to a control signal and to be set conductive in the absence of the control signal, wherein the amount of depletion mode transistors preferably equals the amount of battery cells and particularly preferred equals *n.* Each depletion mode transistor is configured to be connected in parallel with one of the plurality of battery cells and is further configured to be connected in series with a bleed resistor. Particularly preferred, each depletion mode transistor is interconnected between a cell pin and one of a further cell pin or another pin of the control unit. The control unit further comprises a balancing controller that is configured to output an individual control signal to the gate of each of the depletion mode transistors. The control unit according to the present invention is advantageously combined with a plurality of battery cells in order to create a battery system according to the present invention with the advantages described above.

Preferably, the plurality of battery cells or battery bundles are connected in series, wherein each battery bundle may comprise a plurality of battery cells connected in parallel. Each battery cell or battery bundle comprises a first node and a second node. In order to connect the battery cells or bundles in series, the second node of a battery cell or bundle is connected to the first node of another battery cell or bundle, preferably an adjacent battery cell or bundle, and so on. Further preferred, the cell pins are configured to be connected to the second node of each of the battery cells or battery bundles. The depletion mode transistors are preferably configured to be interconnected between a first node and a second node of a battery cell.

The control unit further comprises a plurality of internal bleed resistors, preferably *n* internal bleed resistors, wherein each depletion mode transistor is connected in series with one of the plurality of bleed resistors and interconnected between two cell pins. Particularly preferred, one of a source and a drain of each depletion mode transistor is connected to an *i-th* cell pin via one of the plurality of internal bleed resistors and the other one of the source and the drain of the depletion mode transistor is connected to an *(i-1)-th* cell pin.

Further preferred, the balancing controller comprises a plurality of gate lines configured for connecting the gates of the individual depletion mode transistors to a certain potential required to switch that transistor non-conductive. In other words, the balancing controller is further configured for providing a control signal to the gates of the transistors via individual gate lines. Further preferred, the balancing controller comprises a plurality of switch elements disposed in the gate lines, wherein each switch element can be set either conductive or non-conductive. Further preferred, the switch elements are configured to be conductive by default, i.e. during normal operation, such that the certain potential, i.e. a control signal, is applied to the gate of a depletion mode transistor as balancing switch during normal operation. Hence, the balancing switches are set non conductive during normal operation. Preferably, the battery system comprises a plurality of depletion mode transistors as switch elements.

In a preferred embodiment, the control unit comprises a plurality of NMOS depletion mode transistors and the balancing controller comprises a plurality of inverting charge pumps disposed in the plurality of gate lines. Therein, each inverting charge pump comprises an input node that is connected to the source of one of the plurality of depletion mode NMOS transistors and an output node that is connected to the gate of the respective NMOS transistor. Thus, a negative voltage is applied to the gate of the NMOS transistors with respect to the source of the respective NMOS transistor. The inverting charge pump preferably is an inverting Dickson charge pump. Further preferred, the diodes of the classic inverting charge pump designs are replaced with MOSFETs as active diodes for reducing the absolute voltage drop over the inverting charge pump.

According to an alternative embodiment, the control unit comprises a plurality of PMOS depletion mode transistors and the balancing controller comprises a plurality of charge pumps disposed in the plurality of gate lines. Therein each charge pump comprises an input node that is connected to the source of one of the plurality of depletion mode PMOS transistors and an output node that is connected to the gate of the respective PMOS transistor. Thus, a positive voltage is applied to the gate of the PMOS transistors with respect to the source of the respective PMOS transistor. The charge pump preferably is a Dickson charge pump, wherein the diodes of the classic charge pump designs are replaced with MOSFETs as active diodes for reducing the absolute voltage drop over the charge pump.

Further preferred, the balancing controller comprises a plurality of comparators, wherein each comparator comprises an inverting input connected to an *i-th* battery cell, i.e. being interconnected between the *i-th* cell pin and the *(i-1)-th* cell pin, and a non-inverting input connected to an (i+1)-th battery cell, i.e. being interconnected between the *i-th* cell pin and the *(i+1)-th* cell pin. The polarity and intensity of the comparator's output depends on the relative amplitude of the voltages applied to the inverter's inputs and hence on the voltage differences between the *i-th* battery cell and the *(i+1)-th* battery cell. The comparator's output preferably is connected to the gate of one of the depletion mode switch elements in order to set it conductive based on the whether or not the voltage difference of the *i-th* and *(i+1)-th* cell is above a predetermined threshold. The comparator's output may be amplified before being applied to the gate of a depletion mode switch.

Particularly preferred, the control unit according to the invention comprises a plurality of depletion mode NMOS transistors, wherein the *i-th* depletion mode NMOS transistor comprises a source connected to the *i-th* cell pin, a gate connected to the balancing controller, and a drain connected to one of an *(i+1)-th* cell pin and an *(i+1)-th* balance pin. Therein the balancing controller connects the gate to the *i-th* cell pin via an inverting charge pump or connects the gate to an *(i-1)-th* cell pin. Further preferred, a control unit comprising *n* cell pins comprises *(n-1)* depletion mode NMOS transistors as described above and one depletion mode PMOS transistor that is a configured to be connected in parallel with a first battery cell, i.e. interconnected between ground (module V⁻-terminal) and a first cell pin. Further preferred, the gate of the PMOS transistor is connected to the second cell pin.

Further preferred, the control unit according to the invention comprises a plurality of depletion mode PMOS transistors, wherein the *i-th* depletion mode PMOS transistor comprises a drain connected to the *i-th* cell pin, a gate connected to the balancing controller, and a source connected to one of an *(i+1)-th* cell pin and an *(i+1)-th* balance pin. Therein the balancing controller connects the gate to the *i-th* cell pin via a charge pump or connects the gate to an *(i+1)-th* cell pin. Further preferred, a control unit comprising *n* cell pins comprises *(n-1)* depletion mode PMOS transistors as described above and one depletion mode NMOS transistor that is a configured to be connected in parallel with a last battery cell, i.e. interconnected between the *n-th* cell pin (module V⁺ -terminal) and a *(n-1)-th* cell pin. Further preferred, the gate of the NMOS transistor is connected to the *(n-2)-th* cell pin.

In the context of the present invention, a control unit for a battery system can be one of a BMS, BMU or CSC and may further be an electronic circuit that is configured for controlling an individual battery cell. Usually a control unit comprises one or more integrated circuits (ICs) that are mounted on a suitable circuit carrier, e.g. a printed circuit board (PCB).

Further aspects of the present invention are disclosed in the dependent claims.

### Brief Description of the Drawings

Features will become apparent to those of ordinary skill in the art by describing in detail exemplary embodiments with reference to the attached drawings in which:
Fig. 1 schematically illustrates a battery system according to an embodiment;
Fig. 2 schematically illustrates a battery system according to an alternative embodiment;
Fig. 3 schematically illustrates a charge pump according to an embodiment; and
Fig. 4 schematically illustrates a switch element according to an embodiment.

### Detailed Description of the Invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present invention, however, may be embodied in various different forms, and should not be construed as being limited to only the illustrated embodiments herein. Rather, these embodiments are provided as examples so that this disclosure will be thorough and complete, and will fully convey the aspects and features of the present invention to those skilled in the art. The present invention is solely defined by the appended claims.

Accordingly, processes, elements, and techniques that are not considered necessary to those having ordinary skill in the art for a complete understanding of the aspects and features of the present invention may not be described. In the drawings, the relative sizes of elements, layers, and regions may be exaggerated for clarity.

As used herein, the term "and/or" includes any and all combinations of one or more of the associated listed items. Further, the use of "may" when describing embodiments of the present invention refers to "one or more embodiments of the present invention." In the following description of embodiments of the present invention, the terms of a singular form may include plural forms unless the context clearly indicates otherwise.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present invention. As used herein, the term "and/or" includes any and all combinations of one or more of the associated listed items.

As used herein, the term "substantially," "about," and similar terms are used as terms of approximation and not as terms of degree, and are intended to account for the inherent deviations in measured or calculated values that would be recognized by those of ordinary skill in the art. Further, if the term "substantially" is used in combination with a feature that could be expressed using a numeric value, the term "substantially" denotes a range of +/- 5% of the value centered on the value.

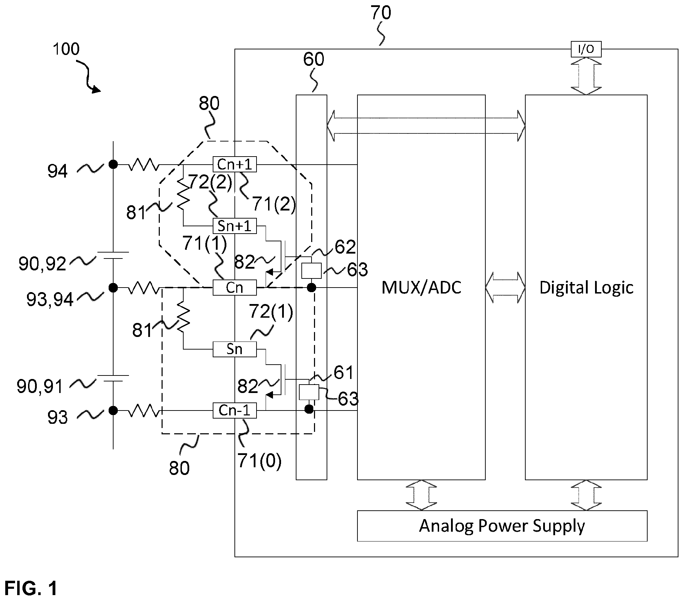

Figure 1 schematically illustrates a battery system 100 according to an embodiment of the present invention. The battery system comprises a plurality of battery cells 90, wherein Figure 1 shows a first battery cell 91 and a second battery cell 92. Each battery cell comprises a first node 93 and a second node 94, wherein the voltage of each battery cell applies between the respective first node 93 and second node 94. The battery cells 90 are connected in series by connecting the second node 94 of a first battery cell 91 to the first node 93 of a second battery cell 92.

The battery system 100 further comprises a plurality of balancing circuits 80, wherein each balancing circuit 80 is connected in parallel with one of the battery cells 90. That is, a balancing circuit 80 connected in parallel with a battery cell 90 is interconnected between the first node 93 and second node 94 of that battery cell 90. Each balancing circuit 80 further comprises a balancing switch 82 that is connected in series with a bleed resistor 81. At least the balancing switches 82 are arranged on a control unit 70 of the battery system 100. The bleed resistors 81 are external to the control unit 70 but internal bleed resistors would also be possible.

The control unit 70 may be a BMS, BMU or CSC of the battery system 100 and may comprise input and output ports I/O for communicating with other control units 70, an analog power supply for receiving an operation voltage of the control unit 70, a digital logic for performing at least one control function with respect to at least one battery cell and a multiplexer and/or analog-to-digital converter MUX/ADC.

The battery system 100 shown in Figure 1 comprises a plurality of NMOS depletion mode transistors 82 as balancing switches. Each NMOS transistor 82 is interconnected between a cell pin Cₙ that is configured for receiving a cell voltage of one of a plurality of battery cells 90 and a balance pin Sₙ.

Particularly, the source of an *n-th* NMOS transistor 82 is connected to an *n-th* cell pin Cₙ and the drain of that NMOS transistor 82 is connected to an *(n+1)-th* balance pin Sₙ₊₁. Further, an external bleed resistor 81 is interconnected between the *(n+1)-th* balance pin Sₙ₊₁ and an *(n+1)-th* cell pin Cₙ₊₁. The gate of the *n-th* NMOS transistor 82 is connected to a balancing controller 60. The balancing controller 60 comprises a plurality of gate lines 61, 62, wherein the second gate line 62 is configured to connect the gate of the *n-th* NMOS transistor 82 to the *n-th* cell pin Cₙ via a charge pump 63. Further, a switch element 64 can be connected in series with the charge pump 63.

Further, the source of an *(n-1)-th* NMOS transistor 82 is connected to an *(n-1)-th* cell pin Cₙ₋₁ and the drain of that NMOS transistor 82 is connected to an *(n)-th* balance pin Sₙ. Further, an external bleed resistor 81 is interconnected between the *(n)-th* balance pin Sₙ and an *(n)-th* cell pin Cₙ. The gate of the *(n-1)-th* NMOS transistor 82 is connected to a balancing controller 60. The balancing controller 60 comprises a plurality of gate lines 61, 62, wherein the first gate line 61 is configured to connect the gate of the *(n-1)-th* NMOS transistor 82 to the *(n-1)-th* cell pin Cₙ₋₁ via a charge pump 63. Further, a switch element 64 can be connected in series with the charge pump 63.

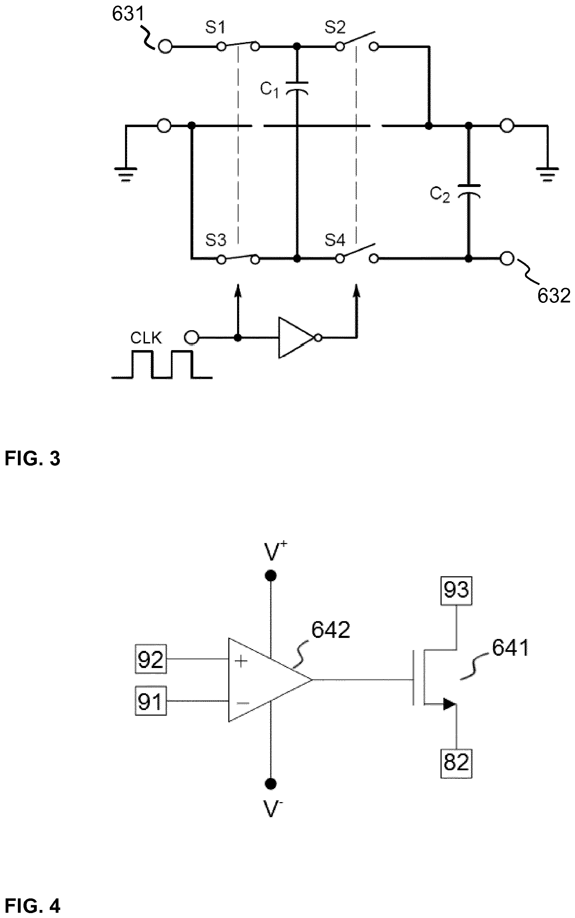

Figure 3 schematically illustrates an embodiment of a charge pump 63. The charge pump 63 comprises a voltage input 631 and a voltage output 632. In the battery system 100 shown in Figure 1 the voltage inputs 631 of the charge pumps 63 are connected to the *(n-1)-th* cell pin Cₙ₋₁ and the *n-th* cell pin Cₙ, respectively. The voltage outputs 632 of the charge pumps 63 are connected to the gates of the *(n-1)-th* NMOS transistor 82 and the *(n-th)* NMOS transistor 82, respectively.

The charge pump 63 inverts the voltage applied to the voltage input 631. Voltage inversion is performed in a two phase operation. During a first phase, the switches S2 and S4 are open, while the switches S1 and S3 are closed. During this time, capacitor C1 charges to the voltage applied to the voltage input 631 and a load current is supplied from capacitor C2. During the second phase, the switches S2 and S4 are closed, while the switches S1 and S3 are open. Thus, capacitor C1 is connected to capacitor C2 and charge is restored to C2. The first phase and the second phase correspond to low and high values of a clock signal CLK, respectively. The clock signal is supplied to the switches S1 and S3, while an inverted clock signal is supplied to the switches S2 and S4.

By positioning the charge pumps 63 in the gate lines 61, 62 of the balancing controller 60 as illustrated in Figure 1, a negative voltage applies to the gates of the NMOS transistor 82 with respect to the sources of the respective NMOS transistors 82. The negative voltages are appropriate control signals setting the NMOS transistors 82 non conductive during normal operation of the battery system 100. Hence, no power of the battery cells 90 is dissipated via the bleed resistors 81 during normal operation of the battery system 100. However, once the service life of the battery cell 90 is near its end, the power produced by the battery cells 90 is not sufficient to operate the control unit 70. Particularly, the voltages applied to the gates of NMOS transistors 82 via charge pumps 63 are no longer sufficient for setting the NMOS transistors 82 non-conductive. Hence, a current flows between the first node 93 and the second node 94 of each battery cell 90 via a respective bleed resistor 81 and hence the battery cells 90 become completely discharged.

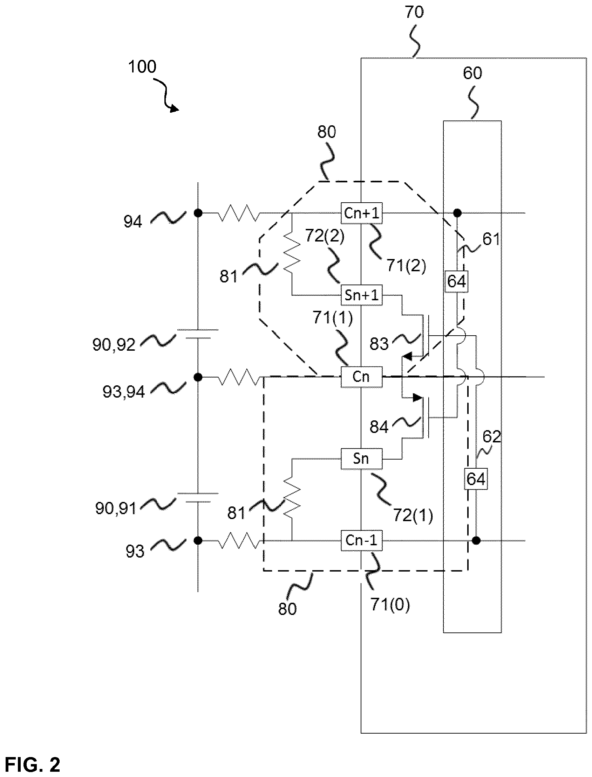

Figure 2 schematically illustrates a battery system 100 according to an alternative embodiment of the present invention.

The battery system 100 differs from the battery system 100 illustrated in Figure 1 in that a depletion mode NMOS transistor 83 is connected in parallel with the second battery cell 92, while a depletion mode PMOS transistor 84 is connected in parallel with the first battery cell 91. Therein, the drain of the NMOS transistor 83 is connected to the *(n+1)-th* balance pin Sₙ₊₁ and the source of the NMOS transistor 83 is connected to the *n-th* cell pin Cₙ. The gate of the NMOS transistor 83 is connected to the *(n-1)-th* cell pin Cₙ₋₁ via a switch element 64. Hence, dependent on the state of switch element 64 a voltage applying to the first node 93 of the first battery cell 91 is supplied to the gate of the NMOS transistor 83. A voltage applying to the first node 93 of the second battery cell 92 applies to the source of the NMOS transistor 83. Hence, the voltage applied to the gate of NMOS 83 is negative with respect to the voltage applied to the source of the NMOS 83. Thus, NMOS 83 can be set non-conductive by setting switch element 64 conductive. By setting the NMOS 83 conductive, the second battery cell 92 is discharged via bleed resistor 81. This can be used at the end of service life of the second battery cell 92 or to balance the second battery cell 92 with respect to another battery cell 90.

The drain of the PMOS transistor 84 is connected to the *n-th* balance pin Sₙ and the source of the PMOS transistor 84 is connected to the *n-th* cell pin Cₙ. The gate of the PMOS transistor 84 is connected to the *(n+1)-th* cell pin Cₙ₊₁ via a switch element 64. Hence, dependent on the state of switch element 64 a voltage applying to the second node 94 of the second battery cell 92 is supplied to the gate of the PMOS transistor 84. A voltage applying to the first node 93 of the second battery cell 92 applies to the source of the PMOS transistor 84. Hence, the voltage applied to the gate of PMOS 84 is positive with respect to the voltage applied to the source of the PMOS 84. Thus, PMOS 84 can be set non-conductive by setting switch element 64 conductive. By setting the PMOS 84 conductive, the first battery cell 91 is discharged via bleed resistor 81. This can be used at the end of service life of the first battery cell 91 or to balance the first battery cell 91 with respect to another battery cell 90.

Figure 4 schematically illustrates a switch element 64 according to an embodiment. The switch element comprises a depletion mode NMOS transistor 641, the drain of which is connected to the first node 93 of a *n-th* battery cell 90, e.g. of the first battery cell 91 of Figure 1, and the source of which is connected to the gate of a NMOS transistor 82 connected in parallel with the *n-th* battery cell 90, e.g. the first battery cell 91 of Figure 1. Hence, in dependence of the switching state of the NMOS transistor 641 a control signal is supplied or not supplied to the gate of balance switch NMOS transistor 82.

The gate of the switch element NMOS transistor 641 is connected to the output of an inverter 642. An inverting input of the inverter 642 is connected to a first battery cell 91, i.e. receives a signal corresponding to the voltage drop between the first node 93 and the second node 94 of the first battery cell 91. A non-inverting input of the inverter 642 is connected to a second battery cell 92, i.e. receives a signal corresponding to the voltage drop between the first node 93 and the second node 94 of the second battery cell 92. Hence, the amplitude and the polarity of the inverter's 642 output depends on the difference between the voltages of the first battery cell 91 and the second battery cell 92. If the output has a negative polarity and exceeds a certain amplitude, e.g. is below the potential of the first node 93 of the first battery cell 91 of Figure 1, the NMOS transistor 641 is set non-conductive. Hence, a balancing switch 82 is set conductive and a battery cell 90, e.g. the first battery cell 91 of Figure 1, becomes discharged via resistor 81.

The electronic or electric devices and/or any other relevant devices or components according to embodiments of the present invention described herein may be implemented utilizing any suitable hardware, firmware (e.g. an application-specific integrated circuit), software, or a combination of software, firmware, and hardware. For example, the various components of these devices may be formed on one integrated circuit (IC) chip or on separate IC chips. Further, the various components of these devices may be implemented on a flexible printed circuit film, a tape carrier package (TCP), a printed circuit board (PCB), or formed on one substrate. The electrical connections or interconnections described herein may be realized by wires or conducting elements, e.g. on a PCB or another kind of circuit carrier. The conducting elements may comprise metallization, e.g. surface metallizations and/or pins, and/or may comprise conductive polymers or ceramics. Further electrical energy might be transmitted via wireless connections, e.g. using electromagnetic radiation and/or light.

Further, the various components of these devices may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like.

Also, a person of skill in the art should recognize that the functionality of various computing devices may be combined or integrated into a single computing device, or the functionality of a particular computing device may be distributed across one or more other computing devices without departing from the scope of the exemplary embodiments of the present invention, the present invention being solely defined by the appended claims.

## Claims

1. Battery system (100), comprising:
a plurality of battery cells (90) connected in series;
a plurality of balancing circuits (80), each balancing circuit (80) being connected in parallel to one of the plurality of battery cells (90) and comprising a bleed resistor (81) connected in series with a balancing switch (82);
a control unit (70) comprising a balancing controller (60), the balancing controller (60) being configured to output an individual control signal for each of the balancing switches (82), **characterized in that**
each balancing switch (82) is configured to be set non-conductive in response to a control signal received by the balancing controller (60) and to be set conductive in the absence of the control signal, and
the balancing controller (60) and the balancing switches (82) are configured for providing balancing between the battery cells (90) and each balancing switch (82) is configured to provide an auto-discharge functionality at the end of life of the battery system (100), wherein at the end of life of battery system (100), the power produced by the battery cells (90) is not sufficient to operate the control unit (70).

2. Battery system (100) according to claim 1, comprising depletion mode transistors (83, 84) as balancing switches (82).

3. Battery system (100) according to claim 2, wherein the depletion mode transistors comprise a plurality of depletion mode NMOS transistors (83), each depletion mode NMOS transistor (83) comprising a source connected to a first node (93) of one of the plurality of battery cells (90), a drain connected to a second node (94) of this battery cell (90) and a gate connected to the balancing controller (60).

4. Battery system (100) according to claim 3, wherein the balancing controller (60) is configured to connect the gate of an *i-th* NMOS transistor (82) connected in parallel with an *i-th* battery cell (92) of the plurality of battery cells (90) to the first node (93) of the *(i-1)-th* battery cell (91) of the plurality of battery cells (90) via an *i-th* gate line (62), wherein the battery cells of the plurality of battery cells (90) are connected in series in an order starting from a first battery cell that is connected to a second battery cell that further is connected to an *(i-1)-th* battery cell, then an *i-th* battery cell and then an *(i+1)-th* battery cell up to a last battery cell.

5. Battery system (100) according to claim 3 or 4, comprising one depletion mode PMOS transistor (84) connected in parallel with the first battery cell (91) of the plurality of battery cells (90).

6. Battery system (100) according to claim 5, wherein the depletion mode PMOS transistor (84) comprises a drain connected to a first node (93) of the first battery cell (91), a source connected to a second node (94) of the first battery cell (91) and a gate connected to the balancing controller (60), and wherein the balancing controller (60) is configured to connect the gate to a second node (94) of the second battery cell (92) of the plurality of battery cells via a first gate line (61).

7. Battery system (100) according to claim 4 or one of claims 5 and 6 insofar they depend on claim 4, wherein the balancing controller (60) comprises a plurality of inverting charge pumps (63), each charge pump (63) being disposed in the *i-th* gate line (62), and each charge pump (63) comprising an input node (631) connected to the source of one of the plurality of depletion mode NMOS transistors (83) and an output node (632) connected to the gate of this NMOS transistor (83).

8. Battery system (100) according to any one of the claims 4 or one of claims 5 to 7 insofar they depend on claim 4, wherein the balancing controller (60) further comprises a plurality of switch elements (64), each switch element (64) being disposed either in the *i-th* gate line (62) or, with respect to the depletion mode PMOS transistor (84) of claim 6, in the first gate line (61).

9. Battery system (100) according to claim 8, wherein the switch elements (64) are depletion mode transistors (641) and wherein the balancing controller (60) further comprises a plurality of comparators (642), each with an inverting input connected to an *i-th* battery cell (91) and a non-inverting input connected to an *(i+1)-th* battery cell (92) and an output connected to the gate of one of the depletion mode transistors (641).

10. Battery system (100) according to claim 2, wherein the control unit (70) further comprises
a plurality of n+1 cell pins (71) configured for receiving a cell voltage of each of the plurality of battery cells (90) and a plurality of n balance pins (72),
wherein one of a source and a drain of each depletion mode transistor (83, 84) is connected to an *i-th* balance pin (72) and the other one of the source and the drain of the depletion mode transistor (83, 84) is connected to an *(i-1)-th* cell pin (71), and
wherein the *i-th* balance pin (72) is configured for being electrically connected to the *i-th* cell pin (71) via at least one of the bleed resistors (81) external to the control unit (70),
wherein the battery cells of the plurality of battery cells (90) are connected in series in an order starting from a first battery cell that is connected to a second battery cell that further is connected to an *(i-1)-th* battery cell, then an *i-th* battery cell and then an *(i+1)-th* battery cell up to a last *n-th* battery cell and wherein the *i-th* battery cell is interconnected between the *i-th* cell pin and the *(i-1)-th* cell pin.

11. Control unit (70) for a battery system (100), comprising
a plurality of cell pins (71) configured for receiving a cell voltage of each of a plurality of battery cells (90);
a plurality of internal bleed resistors;
a plurality of depletion mode transistors (83, 84), each being interconnected between two cell pins (71) to be connected in parallel with one of the plurality of battery cells (90) and each being connected in series with one of the plurality of internal bleed resistors (81); and
a balancing controller (60) configured to output a control signal to the gate of each of the depletion mode transistors (83, 84),
**characterized in that**
the depletion mode transistors (83, 84) are configured for being set non-conductive in response to the control signal generated by the balancing controller (60) and to be set conductive in the absence of the control signal, and
the control unit (70) is configured for providing balancing between the battery cells (90) and an auto-discharge functionality at the end of life of the battery system (100), wherein at the end of life of battery system (100), the power produced by the battery cells (90) is not sufficient to operate the control unit (70).

12. Control unit (70) according to claim 11,
wherein the depletion mode transistors comprise a plurality of depletion mode NMOS transistors (83), wherein an *i-th* depletion mode NMOS transistor (83) comprising a source connected to the *i-th* cell pin (711), a gate connected to the balancing controller (60), and a drain connected to one of an *(i+1)-th* cell pin (712) and an *(i+1)-th* balance pin (722),
wherein the balancing controller (60) comprises a plurality of inverting charge pumps (63) and connects the gate to the *i-th* cell pin (711) via a respective one of the inverting charge pumps (63) or connects the gate to an *(i-1)-th* cell pin (710),
wherein the battery cells of the plurality of battery cells (90) are connected in series in an order starting from a first battery cell that is connected to a second battery cell that further is connected to an *(i-1)-th* battery cell, then an *i-th* battery cell and then an *(i+1)-th* battery cell up to a last battery cell and wherein the *i-th* battery cell is interconnected between the *i-th* cell pin and the *(i-1)-th* cell pin.

## Patentansprüche

1. Batteriesystem (100), umfassend:
eine Vielzahl von in Reihe geschalteten Batteriezellen (90);
eine Vielzahl von Ausgleichsschaltungen (80), wobei jede Ausgleichsschaltung (80) parallel zu einer der Vielzahl von Batteriezellen (90) geschaltet ist und einen Entladewiderstand (81) umfasst, der in Reihe mit einem Ausgleichsschalter (82) geschaltet ist;
eine Steuereinheit (70), die eine Ausgleichssteuerung (60) umfasst, wobei die Ausgleichssteuerung (60) konfiguriert ist, um ein individuelles Steuersignal für jeden der Ausgleichsschalter (82) auszugeben, **dadurch gekennzeichnet, dass**
jeder Ausgleichsschalter (82) so konfiguriert ist, dass er als Reaktion auf ein von der Ausgleichssteuerung (60) empfangenes Steuersignal nicht leitend eingestellt wird und bei Fehlen des Steuersignals leitend eingestellt wird, und
die Ausgleichssteuerung (60) und die Ausgleichsschalter (82) konfiguriert sind, um einen Ausgleich zwischen den Batteriezellen (90) bereitzustellen, und jeder Ausgleichsschalter (82) konfiguriert ist, um eine Selbstentladungsfunktionalität am Ende der Lebensdauer des Batteriesystems (100) bereitzustellen, wobei am Ende der Lebensdauer des Batteriesystems (100) die von den Batteriezellen (90) erzeugte Leistung nicht ausreichend ist, um die Steuereinheit (70) zu betreiben.

2. Batteriesystem (100) nach Anspruch 1, umfassend Verarmungstransistoren (83, 84) als Ausgleichsschalter (82).

3. Batteriesystem (100) nach Anspruch 2, wobei die Verarmungstransistoren eine Vielzahl von Verarmungsmodus-NMOS-Transistoren (83) umfassen, wobei jeder Verarmungsmodus-NMOS-Transistor (83) eine Source, die mit einem ersten Knoten (93) einer der Vielzahl von Batteriezellen (90) verbunden ist, einen Drain, der mit einem zweiten Knoten (94) dieser Batteriezelle (90) verbunden ist, und ein Gate, das mit der Ausgleichssteuerung (60) verbunden ist, umfasst.

4. Batteriesystem (100) nach Anspruch 3, wobei die Ausgleichssteuerung (60) konfiguriert ist, um das Gate eines *i-ten* NMOS-Transistors (82), der parallel mit einer *i-ten* Batteriezelle (92) der Vielzahl von Batteriezellen (90) geschaltet ist, über eine *i-te* Gateleitung (62) mit dem ersten Knoten (93) der *(i-1)-ten* Batteriezelle (91) der Vielzahl von Batteriezellen (90) zu verbinden, wobei die Batteriezellen der Vielzahl von Batteriezellen (90) in einer Reihenfolge in Reihe geschaltet sind, , die mit einer ersten Batteriezelle beginnt, die mit einer zweiten Batteriezelle verbunden ist, die ferner mit einer *(i-1)-ten* dritten Batteriezelle verbunden ist, dann mit einer *i-ten* Batteriezelle und dann mit einer *(i+1)-ten* dritten Batteriezelle bis zu einer letzten Batteriezelle.

5. Batteriesystem (100) nach Anspruch 3 oder 4, das einen Verarmungsmodus-PMOS-Transistor (84) umfasst, der parallel zu der ersten Batteriezelle (91) der Vielzahl von Batteriezellen (90) geschaltet ist.

6. Batteriesystem (100) nach Anspruch 5, wobei der Verarmungsmodus-PMOS-Transistor (84) einen Drain, der mit einem ersten Knoten (93) der ersten Batteriezelle (91) verbunden ist, eine Source, die mit einem zweiten Knoten (94) der ersten Batteriezelle (91) verbunden ist, und ein Gate, das mit der Ausgleichssteuerung (60) verbunden ist, umfasst, und wobei die Ausgleichssteuerung (60) so konfiguriert ist, dass sie das Gate mit einem zweiten Knoten (94) der zweiten Batteriezelle (92) der Vielzahl von Batteriezellen über eine erste Gateleitung (61) verbindet.

7. Batteriesystem (100) nach Anspruch 4 oder einem der Ansprüche 5 und 6, soweit sie von Anspruch 4 abhängen, wobei die Ausgleichssteuerung (60) eine Vielzahl von invertierenden Ladungspumpen (63) umfasst, wobei jede Ladungspumpe (63) in der *i-ten* Gateleitung (62) angeordnet ist und jede Ladungspumpe (63) einen Eingangsknoten (631), der mit der Source eines der Vielzahl von Verarmungsmodus-NMOS-Transistoren (83) verbunden ist, und einen Ausgangsknoten (632), der mit dem Gate dieses NMOS-Transistors (83) verbunden ist, umfasst.

8. Batteriesystem (100) nach einem der Ansprüche 4 oder einem der Ansprüche 5 bis 7, soweit sie von Anspruch 4 abhängen, wobei die Ausgleichssteuerung (60) ferner eine Vielzahl von Schaltelementen (64) umfasst, wobei jedes Schaltelement (64) entweder in der *i-ten* Gateleitung (62) oder, in Bezug auf den Verarmungsmodus-PMOS-Transistor (84) nach Anspruch 6, in der ersten Gateleitung (61) angeordnet ist.

9. Batteriesystem (100) nach Anspruch 8, wobei die Schaltelemente (64) Verarmungstransistoren (641) sind und wobei die Ausgleichssteuerung (60) ferner eine Vielzahl von Komparatoren (642) umfasst, von denen jeder mit einem invertierenden Eingang mit einer *i-ten* Batteriezelle (91) und mit einem nichtinvertierenden Eingang mit einer *(i+1)-ten* Batteriezelle (92) verbunden ist und ein Ausgang mit dem Gate eines der Verarmungstransistoren (641) verbunden ist.

10. Batteriesystem (100) nach Anspruch 2, wobei die Steuereinheit (70) ferner eine Vielzahl von n+1 Zellenstiften (71), die zum Empfangen einer Zellenspannung von jeder der Vielzahl von Batteriezellen (90) konfiguriert sind, und eine Vielzahl von *n* Ausgleichsstiften (72) umfasst,
wobei eine/r von Source und Drain jedes Verarmungstransistors (83, 84) mit einem *i-ten* Ausgleichsstift (72) verbunden ist und die/der andere von Source und Drain des Verarmungstransistors (83, 84) mit einem *(i-1)-ten* Zellenstift (71) verbunden ist, und
wobei der *i-te* Ausgleichsstift (72) so konfiguriert ist, dass er mit dem *i-ten* Zellenstift (71) über mindestens einen der Entladewiderstände (81) außerhalb der Steuereinheit (70) elektrisch verbunden ist,
wobei die Batteriezellen der Vielzahl von Batteriezellen (90) in einer Reihenfolge in Reihe geschaltet sind, die mit einer ersten Batteriezelle beginnt, die mit einer zweiten Batteriezelle verbunden ist, die ferner mit einer *(i-1)-ten* Batteriezelle verbunden ist, dann mit einer *i-ten* Batteriezelle und dann mit einer *(i+1)-ten* Batteriezelle bis zu einer letzten *n-ten* Batteriezelle, und wobei die *i-te* Batteriezelle zwischen den *i-ten* Zellenstift und den *(i-1)-ten* Zellenstift geschaltet ist.

11. Steuereinheit (70) für ein Batteriesystem (100), umfassend
eine Vielzahl von Zellenstiften (71), konfiguriert zum Empfangen einer Zellenspannung von jeder von einer Vielzahl von Batteriezellen (90);
eine Vielzahl interner Entladewiderstände;
eine Vielzahl von Verarmungstransistoren (83, 84), die jeweils zwischen zwei Zellenstiften (71) geschaltet sind, um mit einer der Vielzahl von Batteriezellen (90) parallel geschaltet zu werden, und die jeweils mit einem der Vielzahl von internen Entladewiderständen (81) in Reihe geschaltet sind; und
eine Ausgleichssteuerung (60), die konfiguriert ist, um ein Steuersignal an das Gate jedes der Verarmungstransistoren (83, 84) auszugeben,
**dadurch gekennzeichnet, dass**
die Verarmungstransistoren (83, 84) so konfiguriert sind, dass sie in Reaktion auf das von der Ausgleichssteuerung (60) erzeugte Steuersignal nicht leitend eingestellt werden und bei Fehlen des Steuersignals leitend eingestellt werden, und
die Steuereinheit (70) konfiguriert ist, um einen Ausgleich zwischen den Batteriezellen (90) und eine Selbstentladungsfunktionalität am Ende der Lebensdauer des Batteriesystems (100) bereitzustellen, wobei am Ende der Lebensdauer des Batteriesystems (100) die von den Batteriezellen (90) erzeugte Leistung nicht ausreicht, um die Steuereinheit (70) zu betreiben.

12. Steuereinheit (70) nach Anspruch 11,
wobei die Verarmungstransistoren eine Vielzahl von Verarmungsmodus-NMOS-Transistoren (83) umfassen, wobei ein i-ter Verarmungsmodus-NMOS-Transistor (83) eine Source, die mit dem *i-ten* Zellenstift (711) verbunden ist, ein Gate, das mit der Ausgleichssteuerung (60) verbunden ist, und einen Drain, der mit einem eines *(i+1)-ten* Zellenstifts (712) und eines *(i+1)-ten* Ausgleichsstifts (722) verbunden ist, umfasst,
wobei die Ausgleichssteuerung (60) eine Vielzahl von invertierenden Ladungspumpen (63) umfasst und das Gate über eine jeweilige der invertierenden Ladungspumpen (63) mit dem *i-ten* Zellenstift (711) verbindet oder das Gate mit einem *(i-1)-ten* Zellenstift (710) verbindet,
wobei die Batteriezellen der Vielzahl von Batteriezellen (90) in einer Reihenfolge in Reihe geschaltet sind, die mit einer ersten Batteriezelle beginnt, die mit einer zweiten Batteriezelle verbunden ist, die ferner mit einer *(i-1)-ten* Batteriezelle, dann einer *i-ten* Batteriezelle und dann einer *(i+1)-ten* Batteriezelle bis zu einer letzten Batteriezelle verbunden ist, und wobei die *i-te* Batteriezelle zwischen den *i-ten* Zellenstift und den *(i-1)-ten* Zellenstift geschaltet ist.

## Revendications

1. Système de batterie (100), comprenant :
une pluralité d'éléments de batterie (90) reliés en série ;
une pluralité de circuits d'équilibrage (80), chaque circuit d'équilibrage (80) étant relié en parallèle à l'un de la pluralité d'éléments de batterie (90) et comprenant une résistance de fuite (81) reliée en série avec un commutateur d'équilibrage (82) ;
une unité de commande (70) comprenant un dispositif de commande d'équilibrage (60), le dispositif de commande d'équilibrage (60) étant configuré pour sortir un signal de commande individuel pour chacun des commutateurs d'équilibrage (82), **caractérisé en ce que**
chaque commutateur d'équilibrage (82) est configuré pour être réglé de façon à être non conducteur en réponse à un signal de commande reçu par le dispositif de commande d'équilibrage (60) et pour être réglé de façon à être conducteur en l'absence du signal de commande, et
le dispositif de commande d'équilibrage (60) et les commutateurs d'équilibrage (82) sont configurés pour fournir un équilibrage entre les éléments de batterie (90) et chaque commutateur d'équilibrage (82) est configuré pour fournir une fonctionnalité d'autodécharge à la fin de vie du système de batterie (100), dans lequel à la fin de vie de système de batterie (100), la puissance produite par les éléments de batterie (90) n'est pas suffisante pour faire fonctionner l'unité de commande (70).

2. Système de batterie (100) selon la revendication 1, comprenant des transistors (83, 84) en mode de déplétion en tant que commutateurs d'équilibrage (82).

3. Système de batterie (100) selon la revendication 2, dans lequel les transistors en mode de déplétion comprennent une pluralité de transistors NMOS (83) en mode de déplétion, chaque transistor NMOS (83) en mode de déplétion comprenant une source reliée à un premier noeud (93) de l'un de la pluralité d'éléments de batterie (90), un drain relié à un second noeud (94) de cet élément de batterie (90) et une grille reliée au dispositif de commande d'équilibrage (60).

4. Système de batterie (100) selon la revendication 3, dans lequel le dispositif de commande d'équilibrage (60) est configuré pour relier la grille d'un *i-ème* transistor NMOS (82) relié en parallèle avec un *i-ème* élément de batterie (92) de la pluralité d'éléments de batterie (90) au premier noeud (93) du *(i-1)-ème* élément de batterie (91) de la pluralité d'éléments de batterie (90) via une *i-ème* ligne de grille (62), dans lequel les éléments de batterie de la pluralité d'éléments de batterie (90) sont reliés en série dans un ordre partant d'un premier élément de batterie qui est relié à un second élément de batterie qui est ensuite relié à un *(i-1)-ème* élément de batterie, puis à un *i-ème* élément de batterie puis à un *(i+1)-ème* élément de batterie jusqu'à un dernier élément de batterie.

5. Système de batterie (100) selon la revendication 3 ou 4, comprenant un transistor PMOS (84) en mode de déplétion relié en parallèle avec le premier élément de batterie (91) de la pluralité d'éléments de batterie (90).

6. Système de batterie (100) selon la revendication 5, dans lequel le transistor PMOS (84) en mode de déplétion comprend un drain relié à un premier noeud (93) du premier élément de batterie (91), une source reliée à un second noeud (94) du premier élément de batterie (91) et une grille reliée au dispositif de commande d'équilibrage (60), et dans lequel le dispositif de commande d'équilibrage (60) est configuré pour relier la grille à un second noeud (94) du second élément de batterie (92) de la pluralité d'éléments de batterie (90) via une première ligne de grille (61).

7. Système de batterie (100) selon la revendication 4 ou l'une des revendications 5 et 6 dans la mesure où elles dépendent de la revendication 4, dans lequel le dispositif de commande d'équilibrage (60) comprend une pluralité de pompes de charge (63) inverseuses, chaque pompe de charge (63) étant disposée dans la *i-ème* ligne de grille (62), et chaque pompe de charge (63) comprenant un noeud d'entrée (631) relié à la source de l'un de la pluralité de transistors NMOS (83) en mode de déplétion et un noeud de sortie (632) relié à la grille de ce transistor NMOS (83).

8. Système de batterie (100) selon l'une quelconque des revendications 4 ou l'une des revendications 5 à 7 dans la mesure où elles dépendent de la revendication 4, dans lequel le dispositif de commande d'équilibrage (60) comprend en outre une pluralité d'éléments de commutation (64), chaque élément de commutation (64) étant disposé soit dans la *i-ème* ligne de grille (62) soit, s'agissant du transistor PMOS (84) en mode de déplétion de la revendication 6, dans la première ligne de grille (61).

9. Système de batterie (100) selon la revendication 8, dans lequel les éléments de commutation (64) sont des transistors (641) en mode de déplétion et dans lequel le dispositif de commande d'équilibrage (60) comprend en outre une pluralité de comparateurs (642), chacun avec une entrée inverseuse reliée à un *i-ème* élément de batterie (91) et une entrée non inverseuse reliée à un *(i+1)-ème* élément de batterie (92) et une sortie reliée à la grille de l'un des transistors (641) en mode de déplétion.

10. Système de batterie (100) selon la revendication 2, dans lequel l'unité de commande (70) comprend en outre une pluralité de n+1 broches d'élément (71) configurées pour recevoir une tension d'élément de chacun de la pluralité d'éléments de batterie (90) et une pluralité de n broches d'équilibre (72),
dans lequel l'un parmi une source et un drain de chaque transistor (83, 84) en mode de déplétion est relié à une *i-ème* broche d'équilibre (72) et l'autre parmi la source et le drain de chaque transistor (83, 84) en mode de déplétion est relié à une *(i-1)-ème* broche d'élément (71), et
dans lequel la *i-ème* broche d'équilibre (72) est configurée pour être électriquement reliée à la *i-ème* broche d'élément (71) via au moins l'une des résistances de fuite (81) extérieures à l'unité de commande (70),
dans lequel les éléments de batterie de la pluralité d'éléments de batterie (90) sont reliés en série dans un ordre partant d'un premier élément de batterie qui est relié à un second élément de batterie qui est ensuite relié à un *(i-1)-ème* élément de batterie, puis à un *i-ème* élément de batterie puis à un *(i+1)-ème* élément de batterie jusqu'à un dernier *i-ème* élément de batterie et dans lequel le *i-ème* élément de batterie est interconnecté entre la *i-ème* broche d'élément et la *(i-1)-ème* broche d'élément.

11. Unité de commande (70) pour un système de batterie (100), comprenant
une pluralité de broches d'élément (71) configurées pour recevoir une tension d'élément de chacun d'une pluralité d'éléments de batterie (90) ;
une pluralité de résistances de fuite intérieures ;
une pluralité de transistors (83, 84) en mode de déplétion, chacun étant interconnecté entre deux broches d'élément (71) pour être relié en parallèle avec l'un de la pluralité d'éléments de batterie (90) et chacun étant relié en série avec l'une de la pluralité de résistances de fuite (81) intérieures ; et
un dispositif de commande d'équilibrage (60) configuré pour sortir un signal de commande vers la grille de chacun des transistors (83, 84) en mode de déplétion,
**caractérisé en ce que**
les transistors (83, 84) en mode de déplétion sont configurés pour être réglés de façon à être non conducteurs en réponse au signal de commande généré par le dispositif de commande d'équilibrage (60) et pour être réglés de façon à être conducteurs en l'absence du signal de commande, et
l'unité de commande (70) est configurée pour fournir un équilibrage entre les éléments de batterie (90) et une fonctionnalité d'autodécharge à la fin de vie du système de batterie (100), dans laquelle à la fin de vie de système de batterie (100), la puissance produite par les éléments de batterie (90) n'est pas suffisante pour faire fonctionner l'unité de commande (70).

12. Unité de commande (70) selon la revendication 11,
dans laquelle les transistors en mode de déplétion comprennent une pluralité de transistors NMOS (83) en mode de déplétion, dans laquelle un *i-ème* transistor NMOS (83) en mode de déplétion comprenant une source reliée à la *i-ème* broche d'élément (711), une grille reliée au dispositif de commande d'équilibrage (60) et un drain relié à l'un parmi une *(i+1)-ème* broche d'élément (712) et une *(i+1)-ème* broche d'équilibre (722),
dans laquelle le dispositif de commande d'équilibrage (60) comprend une pluralité de pompes de charge (63) inverseuses et relie la grille à la *i-ème* broche d'élément (711) via l'une respective des pompes de charge (63) inverseuses ou relie la grille à une *(i-1)-ème* broche d'élément (710),
dans laquelle les éléments de batterie de la pluralité d'éléments de batterie (90) sont reliés en série dans un ordre partant d'un premier élément de batterie qui est relié à un second élément de batterie qui est ensuite relié à un *(i-1)-ème* élément de batterie, puis à un *i-ème* élément de batterie puis à un *(i+1)-ème* élément de batterie jusqu'à un dernier élément de batterie et dans laquelle le *i-ème* élément de batterie est interconnecté entre la *i-ème* broche d'élément et la *(i-1)-ème* broche d'élément.
